(19) **Europäisches Patentamt / European Patent Office / Office européen des brevets**

(11) **EP 4 675 338 A1**

(12) **EUROPEAN PATENT APPLICATION**
published in accordance with Art. 153(4) EPC

(43) Date of publication:
**07.01.2026 Bulletin 2026/02**

(21) Application number: **24783148.0**

(22) Date of filing: **20.03.2024**

(51) International Patent Classification (IPC):
$G02B\ 30/56^{(2020.01)}$    $G02B\ 27/14^{(2006.01)}$
$G02B\ 1/11^{(2015.01)}$    $G02B\ 5/10^{(2006.01)}$

(52) Cooperative Patent Classification (CPC):
**G02B 1/11; G02B 5/10; G02B 27/14; G02B 30/56**

(86) International application number:
**PCT/KR2024/003514**

(87) International publication number:
**WO 2024/210367 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 KR 20230045648**
**21.08.2023 KR 20230109123**

(71) Applicant: **Samsung Electronics Co., Ltd.**
**Suwon-si, Gyeonggi-do 16677 (KR)**

(72) Inventors:
• **WON, Kwanghyun**
  **Suwon-si, Gyeonggi-do 16677 (KR)**
• **KIM, Hyungki**
  **Suwon-si, Gyeonggi-do 16677 (KR)**

(74) Representative: **Appleyard Lees IP LLP**
**15 Clare Road**
**Halifax HX1 2HY (GB)**

(54) **DISPLAY DEVICE FOR PROVIDING IMMERSIVE IMAGE**

(57) The disclosed display device includes an image forming unit configured to provide image light, a concave mirror configured to focus the image light provided by the image forming unit, a beam splitter disposed obliquely with respect to a traveling path of the image light emitted from the image forming unit, a polarization control optical element configured to transmit the image light provided by the image forming unit to an observer's field of view through the concave mirror and the beam splitter, and an anti-reflection film configured to block noise light reflected from a polarizer from the observer's field of view on the opposite side of the image forming unit, wherein the thickness of the anti-reflection film decreases away from the central portion of the anti-reflection film.

FIG. 1

## Description

## Technical Field

The disclosure relates to an immersive display device.

## Background Art

Three-dimensional (3D) image display technology has been applied to various fields, and has recently been applied to image devices related to virtual reality (VR) and augmented reality (AR).

VR devices may be implemented as wearable devices, such as glasses type, head mount type, or goggle type, or may be implemented as non-wearable devices.

In addition, the immersive sense that a user watching an image experiences may be affected by surrounding environments such as illuminance, and methods of reducing such an effect are being sought.

## Disclosure of Invention

## Solution to Problem

A display device according to an embodiment includes an image forming unit configured to provide image light. A concave mirror focuses the image light provided by the image forming unit. A polarization control optical element is configured to transmit the image light provided by the image forming unit to an observer's field of view through the concave mirror and a beam splitter. An anti-reflection film is configured to block noise light from the observer's field of view. The thickness of the anti-reflection film may decrease away from the center of the anti-reflection film.

A display device according to an embodiment includes an image forming unit configured to provide image light. A concave mirror focuses the image light provided by the image forming unit. A polarization control optical element is configured to transmit the image light provided by the image forming unit to an observer's field of view through the concave mirror and a beam splitter. An angle formed by the image forming unit with an optical axis of the image light reflected from the concave mirror may be 5 degrees or more and less than 45 degrees. An angle formed by the concave mirror with the optical axis of the image light reflected from the concave mirror may be 5 degrees or more and less than 45 degrees.

## Brief Description of Drawings

FIG. 1 is a schematic view of a structure of a display device according to an embodiment.
FIG. 2 is a diagram of an optical path of noise light blocked by the display device of FIG. 1.
FIG. 3 is a schematic view of a structure of an anti-reflection film according to an embodiment.
FIG. 4 is a schematic view of a structure of a display device according to another embodiment.
FIG. 5 is a schematic view of a structure of a display device according to another embodiment.
FIG. 6 is a schematic view of a structure of a display device according to another embodiment.
FIG. 7 is a schematic view of a structure of a display device according to another embodiment.
FIG. 8 is a schematic view of a structure of a display device according to another embodiment.
FIG. 9 is a schematic view of a structure of a display device according to another embodiment.
FIG. 10 is a schematic view of a structure of a display device according to another embodiment.
FIG. 11 is a schematic view of an angle formed by each component of the display device of FIG. 10 with an optical axis of image light reflected from a concave mirror.
FIGS. 12 and 13 are schematic views of a structure of an anti-reflection film according to another embodiment.
FIG. 14 is a schematic view of a structure of a display device according to another embodiment.
FIG. 15 is a schematic view of a structure of a display device according to another embodiment.
FIG. 16 is a schematic view of a structure of a display device according to another embodiment.
FIG. 17 is a schematic view of a structure of a display device according to another embodiment.
FIG. 18 is a schematic view of a structure of a display device according to another embodiment.
FIG. 19 is a schematic view of a structure of a display device according to another embodiment.
FIG. 20 is a schematic view of a structure of a display device according to another embodiment.

## Mode for the Invention

A display device according to an embodiment includes an image forming unit configured to provide image light. A concave mirror focuses the image light provided by the image forming unit. A polarization control optical element is configured to transmit the image light provided by the image forming unit to an observer's field of view through the concave mirror and a beam splitter. An anti-reflection film is configured to block noise light from the observer's field of view. The thickness of the anti-reflection film may decrease away from the center of the anti-reflection film.

A display device according to an embodiment includes an image forming unit configured to provide image light. A concave mirror focuses the image light provided by the image forming unit. A polarization control optical element is configured to transmit the image light provided by the image forming unit to an observer's field of view through the concave mirror and a beam splitter. An angle formed by the image forming unit with an optical axis of the image light reflected from the concave mirror may be 5 degrees or more and less than 45 degrees. An angle formed by the concave mirror with the optical axis of the image light reflected from the concave mirror may be 5 degrees or more and less than 45 degrees.

Hereinafter, embodiments of the disclosure will be described in detail with reference to the accompanying drawings such that one of ordinary skill in the art may easily implement the disclosure. However, the disclosure may be implemented in various different forms and is not limited to the embodiments described herein. Also, in the drawings, parts irrelevant to the description are omitted in order to clearly describe the disclosure, and like reference numerals designate like elements throughout the specification.

Throughout the specification, it will also be understood that when a portion is referred to as being "connected to" another portion, it can be directly connected to the other portion, or it can be electrically connected to the other portion and intervening elements may be present. In addition, when a portion "includes" a certain element, the portion may further include another element instead of excluding the other element, unless otherwise stated.

Also, in the specification, the terms such as "units" denote units or that process at least one function or operation, and may be realized by hardware, software, or a combination of hardware and software

The terms used in this specification are those general terms currently widely used in the art in consideration of functions in regard to the disclosure, but the terms may vary according to the intention of those of ordinary skill in the art, precedents, or new technology in the art. Also, specified terms may be selected by the applicant, and in this case, the detailed meaning thereof will be described in the detailed description of the disclosure. Thus, the terms used in the specification should be understood not as simple names but based on the meaning of the terms and the overall description of the disclosure.

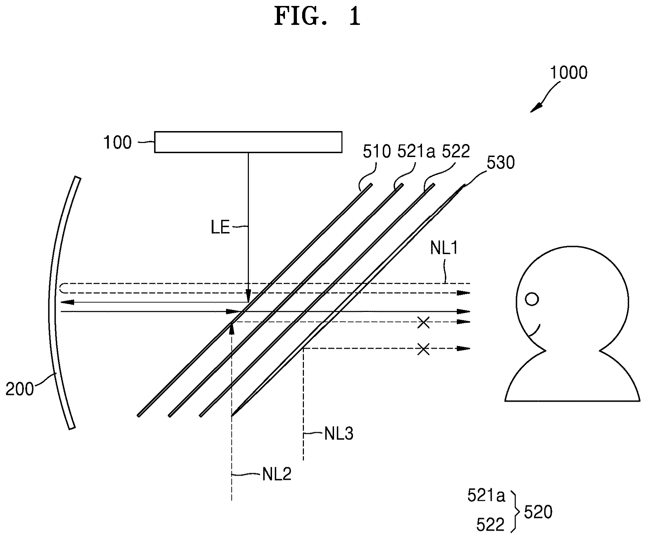

FIG. 1 is a schematic view of a structure of a display device according to an embodiment.

A display device 1000 may include an image forming unit 100 providing image light LE, a concave mirror 200 focusing the image light provided by the image forming unit 100, a beam splitter 510 transmitting the image light LE provided by the image forming unit 100 to an observer's field of view through the concave mirror 200, and a polarization control optical element 520.

The type of an image formed by the image forming unit 100 is not particularly limited, and may be, for example, a 2D image or a 3D image. The 3D image may be, for example, a stereo image, a hologram image, a light field image, or an integral photography (IP) image, and may also be a multi-view image or a super multi-view image.

The image forming unit 100 may include, for example, a liquid crystal on silicon (LCoS) device, a liquid crystal display (LCD) device, an organic light-emitting diode (OLED) display device, a digital micromirror device (DMD), or a next-generation display device such as a micro LED or a quantum dot (QD) LED. When the image forming unit 100 is a non-emission type device such as an LCD, a light source providing light for image formation may be further included.

Hereinafter, a first polarization may be linear polarization in a certain direction, and may be, for example, P-polarization or S-polarization. P-polarization and S-polarization are linear polarization in directions perpendicular to each other. Hereinafter, the first polarization will be referred to as P-polarization and the second polarization will be referred to as S-polarization. However, this is an example, and the terms may be interchanged with each other.

The beam splitter 510 may be obliquely disposed with respect to a traveling path of the image light LE emitted from the image forming unit 100. The beam splitter 510 may be a half mirror. That is, the beam splitter 510 may transmit half of incident light and reflect the other half. Alternatively, the beam splitter 510 may be a polarization beam splitter that reflects light of the first polarization and transmits light of the second polarization perpendicular to the first polarization. The beam splitter 510 may reflect the image light LE emitted from the image forming unit 100 and transmit the image light LE to the concave mirror 200. The image light LE reflected by the concave mirror 200 may be transmitted to any one of the polarization control optical elements 520.

The polarization control optical element 520 may include at least one quarter wave plate (e.g., a first quarter wave plate 521a) and a polarizer. The beam splitter 510 and the polarization control optical element 520 may be configured to transmit the image light LE to the observer's field of view, and to reduce or block noise light other than the image light LE from an observer as much as possible.

The noise light may be generated by ambient illuminance in an environment in which the observer views an image. For example, the noise light may include first noise light NL1 of an optical path such that an image of the observer is incident on the polarization control optical element 520, reflected by the concave mirror 200, and enters the observer's field of view. Alternatively, the noise light may include second noise light NL2 and third noise light NL3 of an optical path such that an image of a table on which the display device 1000 is installed or an image of a floor surface near the display device 1000 enters the observer's field of view through the polarization control optical element 520. In the specification, the second noise light NL2 and the third noise light NL3 are classified for convenience of explanation, but may be lights incident on the same optical path from the table on which the display device 1000 is installed or from near the display device 1000 toward the polarization control optical element 520. Hereinafter, among the lights incident on the same optical path from the table on which the display device 1000 is installed or from near the display device 1000 toward the polarization control optical element 520, noise light transmitted through the polarizer 522 and incident toward the beam splitter 510 may be referred to as the second noise light NL2. In addition, among the lights incident on the same optical path from the table on which the display device 1000 is installed or from near the display device 1000 toward the polarization control optical element 520, noise light that does not transmit through the polarizer 522 may be referred to as the third noise light NL3.

The polarization control optical element 520 may be configured to prevent such noise light from reaching the observer's field of view. The polarization control optical element 520 refers to an optical element that exhibits optical performance dependent on the polarization state of incident light, and, for example, collectively refers to a polarizer that transmits only light of a certain polarization, a phase retarder that changes the phase of incident light, a quarter wave plate that changes polarization by changing the phase of incident light by 45 degrees, etc. By appropriately setting optical properties such as the numbers or arrangement positions of the polarizer, the phase retarder, and the quarter wave plate, a direction of a fast axis/slow axis of the quarter wave plate, and a polarization axis of the polarizer, the first noise light NL1 and the second noise light NL2 may be blocked as much as possible from the observer's field of view. In addition, in this process, the loss of the image light LE by these polarization control optical elements 520 may be prevented as much as possible.

In addition, the display device 1000 may include an anti-reflection film 530. The anti-reflection film 530 may be located on the opposite side of the image forming unit 1000 and block the third noise light NL3 of an optical path such that the image of the table on which the display device 1000 is installed or the image of the floor surface near the display device 1000 is reflected from the polarizer 522 and enters the observer's field of view.

The display device 1000 may block the first noise light NL1, the second noise light NL2, and the third noise light NL3 as much as possible and transmit the image light LE to the observer's field of view, thereby increasing the immersive sense of the observer viewing an image.

The first quarter wave plate 521a is a phase retarder that retards the phase of incident light by 45 degrees, whereby linear polarization may be converted into circular polarization and circular polarization may be converted into linear polarization. For example, the first quarter wave plate 521a may have a fast axis direction of 45 °, convert P-polarization into left handed circular polarization, convert S-polarization into right handed circular polarization, and convert left handed circular polarization into S-polarization and right handed circular polarization into P-polarization. Alternatively, the first quarter wave plate 521a may have a fast axis direction of -45 °, convert P-polarization into right handed circular polarization, convert S-polarization into left handed circular polarization, left handed circular polarization into P-polarization, and right handed circular polarization into S-polarization.

The polarizer 522 may transmit light that is linear polarized in a certain direction and block light that is linear polarized in a direction perpendicular thereto. For example, light of the first polarization, that is, P-polarization, may be transmitted, and light of the second polarization, that is, S-polarization, which is perpendicular thereto, may be absorbed.

For example, the image forming unit 100 of the display device 1000 may provide the image light LE in an unpolarization (UP) state. The image light LE in the UP state provided by the image forming unit 100 may be reflected by the beam splitter 510, reach the concave mirror 200, and then reflected by the concave mirror 200. In this process, the UP state of the image light Le may be maintained. The image light LE may transmit through the beam splitter 510, and reach first quarter wave plate 521a. The UP state of the image light Le may be maintained even after the phase retardation by the first quarter wave plate 521a, and the light of the first polarization of the image light LE may transmit through the polarizer 570 and be provided to the observer's field of view.

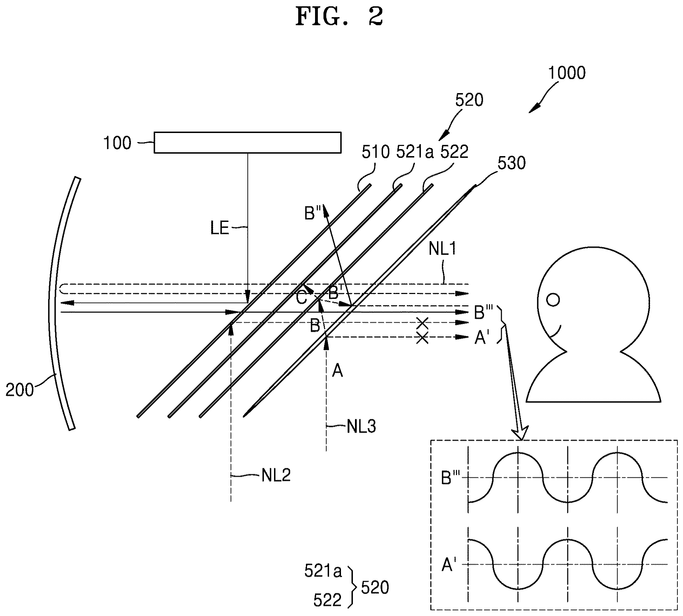

FIG. 2 is a diagram of an optical path of noise light blocked by the display device of FIG. 1.

The concave mirror 200 may focus the image light LE on a virtual plane at a certain distance in front of an observer. The virtual plane is an imaginary focal plane of the concave mirror 200. The concave mirror 200 allows the observer to perceive the image light LE provided by the image forming unit 100 as an image from the virtual plane in front of the observer.

The first noise light NL1 may be in the UP state, that is, light in which various polarization states are mixed. Of the first noise light NL1, only light in a first polarization state may transmit through the polarizer 522. That is, in this process, a part of the first noise light NL1 is blocked from the optical path toward the observer. The first noise light NL1 of the first polarization may pass through the first quarter wave plate 521a to be in a left handed circular polarization state and transmit through the beam splitter 510. Next, the first noise light NL1 in the left handed circular polarization state may be reflected by the concave mirror 200, converted into a right handed circular polarization state, and transmit through the beam splitter 510. The first noise light NL1 in the right handed circular polarization state may pass through the first quarter wave plate 521a again to be in a second polarization state. The polarizer 522 may transmit only light of the first polarization, the first noise light NL1 in the second polarization state may be blocked by not transmitting through the polarizer 522, and thus may not reach the observer's field of view.

The second noise light NL2 may be also in the UP state, that is, light in which various polarization states are mixed. Of the second noise light NL2, only light in the first polarization state may transmit through the polarizer 522. In this process, a part of the second noise light NL2 may be blocked from the optical path toward the observer's field of view. The second noise light NL2 of the first polarization may pass through the first quarter wave plate 521a to be in the left handed circular polarization state and reach the beam splitter 510. Next, the second noise light NL2 in the left handed circular polarization state may be reflected by the beam splitter 510 and converted into the right handed circular polarization state. The second noise light NL2 in the right handed circular polarization state may pass through the first quarter wave plate 521a again to be in the second polarization state. The polarizer 522 may transmit only light of the first polarization, the second noise light NL2 in the second polarization state may be blocked by the polarizer 522, and thus may not reach the observer's field of view.

The third noise light NL3 may be light A incident on the polarizer 522 from the opposite side of the image forming unit 100. A part of the light A incident on the polarizer 522 may be reflected by the anti-reflection film 530 (A'), and the other part may transmit through the anti-reflection film 530 and be incident on the polarizer 522 (B). A part of the light B transmitted through the anti-reflection film 530 and incident on the polarizer 522 may be reflected by the polarizer 522 (B'), and the other part may transmit through the polarizer 522 and be incident on the first quarter wave plate 521a (C). A part of the light B' reflected by the polarizer 522 may transmit through the anti-reflection film 530 (B‴), and the other part may be reflected by the anti-reflection film 530 (B"). The light B" reflected by the anti-reflection film 530 may not reach the observer's field of view. Like the second noise light NL2 described above, the light C incident on the first quarter wave plate 521a may be blocked and not reach the observer's field of view.

In this regard, the anti-reflection film 530 may be configured to cause destructive interference to occur between the light A' reflected by the anti-reflection film 530 and the light B‴ reflected by the polarizer 522 and transmitted through the anti-reflection film 530. For example, the anti-reflection film 530 may be configured such that the relative phase difference between the light A' reflected by the anti-reflection film 530 and the light B‴ reflected by the polarizer 522 and transmitted through the anti-reflection film 530 is $\pi$. Refraction may occur when the light A incident on the polarizer 522 from the opposite side of the image forming unit 100 transmits through the anti-reflection film 530 (B), and refraction may occur when the light B' reflected by the polarizer 522 transmits through the anti-reflection film 530 again (B‴). Accordingly, the light B‴ transmitted through the anti-radiation film 530 may have the phase difference of $\pi$ from the light A' reflected from the anti-reflection film 530 by refraction, and the light B‴ transmitted through the anti-radiation film 530 may have an offset interference with the light A' reflected from the anti-reflection film 530 by refraction. Therefore, the third noise light NL3, which is the light A incident on the polarizer 522, may be blocked and may not reach the observer's field of view.

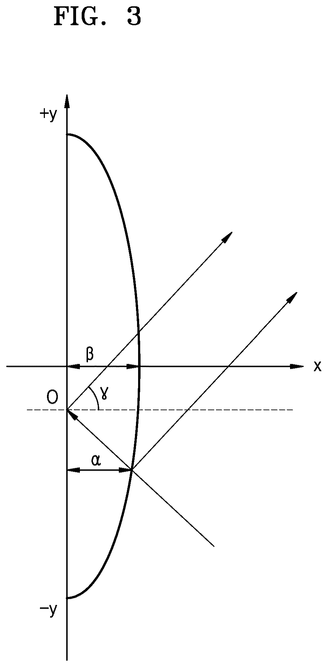

FIG. 3 is a schematic view of a structure of an anti-reflection film according to an embodiment.

Referring to FIG. 3, the anti-reflection film 530 may have different thicknesses according to positions. For example, the anti-reflection film 530 may have the largest thickness $\beta$ in an x-direction in a central portion 0, and a thickness $\alpha$ of the anti-reflection film 530 may decrease away from the central portion 0 in +y and -y directions. Here, the x direction may indicate a thickness direction of the anti-reflection film 530, and the y direction may be a direction perpendicular to the x direction. An angle $\gamma$ formed by light incident on the anti-reflection film 530 with one surface of the anti-reflection film 530, the thickness $\beta$ of the anti-reflection film 530 in the central portion 0, and the thickness $\alpha$ of the anti-reflection film 530 may satisfy Equation 1 below. Here, $\lambda$ may denote a wavelength of visible light incident on the anti-reflection film 530.

## [Equation 1]

$$\frac{\alpha}{\cos\gamma} + \frac{\beta}{\cos\gamma} = \frac{\lambda}{2}$$

FIG. 3 illustrates an example in which one cross section of the anti-reflection film 530 has a semicircular shape, but the anti-reflection film 530 is not limited thereto and may have various shapes.

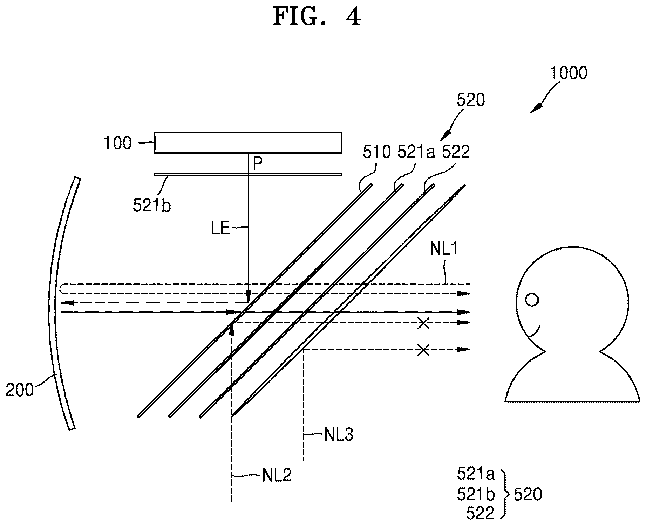

FIG. 4 is a schematic view of a structure of a display device according to another embodiment.

Referring to FIG. 4, the polarization control optical element 520 of the display device 1000 may further include a second quarter wave plate 521b as compared with FIG. 1. That is, the polarization control optical element 520 of the display device 1000 may include a plurality of quarter wave plates 521a and 521b. The first quarter wave plate 521a, which is one of the plurality of quarter wave plates 521a and 521b, may be provided between the beam splitter 510 and the polarizer 522, and the other second quarter wave plate 521b may be provided between the image forming unit 100 and the concave mirror 200.

In the embodiment, the image light LE provided by the image forming unit 100 may be in a first polarization state. The image light LE provided by the image forming unit 100 in the first polarization state may be converted into a left handed circular polarization state while passing through the second quarter wave plate 521b and reach the beam splitter 510. The image light LE reflected by the beam splitter 510 may reach the concave mirror 200 in a right handed circular polarization state. Next, the image light LE may be reflected by the concave mirror 200, and the polarization state thereof may become left handed circular polarization again and the image light LE may transmit through the beam splitter 510. The image light LE of the left handed circular polarization may pass through the first quarter wave plate 521a and be converted into the first polarization, transmit through the polarizer 522 that transmits light of the first polarization, and reach an observer's field of view.

The first noise light NL1 may be in an UP state, that is, light in which various polarization states are mixed. Of the first noise light NL1, only light in the first polarization state may transmit through the polarizer 522. That is, in this process, a part of the first noise light NL1 may be blocked from an optical path toward an observer. The first noise light NL1 of the first polarization may pass through the first quarter wave plate 521a to be in the left handed circular polarization state and transmit through the beam splitter 510. Next, the first noise light NL1 in the left handed circular polarization state may be reflected by the concave mirror 200, converted into the right handed circular polarization state, and transmit through the beam splitter 510. The first noise light NL1 in the right handed circular polarization state may pass through the first quarter wave plate 521a again to be in a second polarization state. The polarizer 522 may transmit only light of the first polarization, the first noise light NL1 in the second polarization state may be blocked by not transmitting through the polarizer 522, and thus may not reach the observer's field of view.

The second noise light NL2 may be also in the UP state, that is, light in which various polarization states are mixed. Of the second noise light NL2, only light in the first polarization state may transmit through the polarizer 522. In this process, a part of the second noise light NL2 may be blocked from the optical path toward the observer's field of view. The second noise light NL2 of the first polarization may pass through the first quarter wave plate 521a to be in the left handed circular polarization state and reach the beam splitter 510. Next, the second noise light NL2 in the left handed circular polarization state may be reflected by the beam splitter 510, converted into the right handed circular polarization state, and pass through the first quarter wave plate 521a again to be in the second polarization state. The polarizer 522 may transmit only light of the first polarization, and thus the second noise light NL2 in the second polarization state may not transmit through the polarizer 522, i.e., may not reach the observer's field of view.

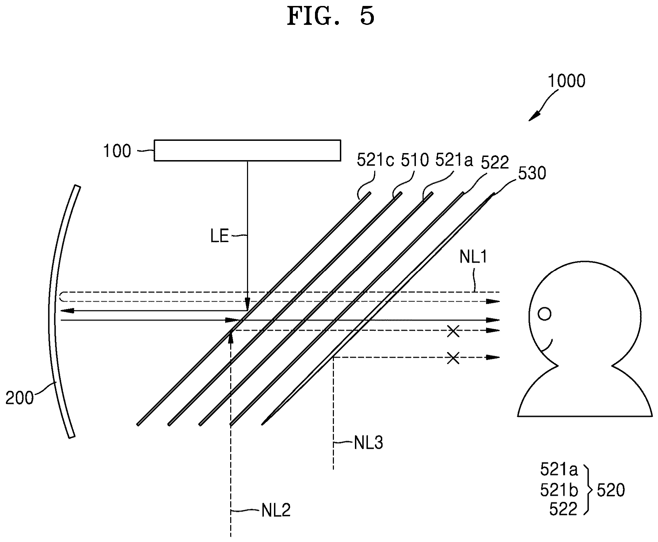

FIG. 5 is a schematic view of a structure of a display device according to another embodiment.

Referring to FIG. 5, the polarization control optical element 520 of the display device 1000 may further include a second quarter wave plate 521c as compared with FIG. 1. That is, the polarization control optical element 520 of the display device 1000 may include a plurality of quarter wave plates 521a and 521c. The first quarter wave plate 521a, which is one of the plurality of quarter wave plates 521a and 521c, may be provided between the beam splitter 510 and the polarizer 522, and the other second quarter wave plate 521c may be disposed closer to the beam splitter 510 between the image forming unit 100 and the beam splitter 510. The second quarter wave plate 521c may be obliquely disposed with respect to an optical axis of the image light LE provided by the image forming unit 100. For example, the second quarter wave plate 521c may be disposed at an angle of 45 degrees with respect to the optical axis of the image light LE, but is not limited thereto. The second quarter wave plate 521c may be disposed in parallel with the beam splitter 510, but is not limited thereto. In this arrangement, the second quarter wave plate 521c may be positioned over an optical path of the image light LE toward the beam splitter 510 and an optical path of the image light LE toward the concave mirror 200 through the beam splitter 510.

The first quarter wave plate 521a and the second quarter wave plate 521c may have the same fast axis direction. For example, the plurality of quarter wave plates 521a and 521c each may have a fast axis direction of -45 °, convert P polarization into the right handed circular polarization, convert S-polarization into the left handed circular polarization, the left handed circular polarization into the P-polarization, and the right handed circular polarization into the S-polarization.

The image light LE provided by the image forming unit 100 in the first polarization state may pass through the second quarter wave plate 521c to be converted into the right handed circular polarization state and reach the beam splitter 510. After being reflected by the beam splitter 510, the image light LE may be in the left handed circular polarization state and incident on the second quarter wave plate 521c again. The image light LE may be in the second polarization state while passing through the second quarter wave plate 521c and reach the concave mirror 200. Next, when the image light LE is reflected by the concave mirror 200, the image light LE may maintain in the second polarization state, which is a linear polarization state, be incident on the second quarter wave plate 521c, converted into the left handed circular polarization state by the second quarter wave plate 521c, and then transmit through the beam splitter 510. Next, the image light LE may pass through the first quarter wave plate 521a to be in the first polarization state. The polarizer 522 may transmit light of the first polarization, and the image light LE may transmit through the polarizer 522 and be transmitted to the observer's field of view.

The first noise light NL1 may be in the UP state, that is, light in which various polarization states are mixed. Of the first noise light NL1, only light in the first polarization state may transmit through the polarizer 522. In this process, a part of the first noise light NL1 may be blocked from the optical path toward the observer's field of view. The first noise light NL1 of the first polarization may pass through the first quarter wave plate 521a to be in the left handed circular polarization state and transmit through the beam splitter 510. Next, the first noise light NL1 may pass through the second quarter wave plate 521c to be in the second polarization state, and reach the concave mirror 200. When the first noise light NL1 in the second polarization state is reflected by the concave mirror 200, the first noise light NL1 may maintain the second polarization state, which is a linear polarization state, and the first noise light NL1 in the second polarization state may pass through the second quarter wave plate 521c again and be converted into the left handed circular polarization state. Next, the first noise light NL1 in the left handed circular polarization may transmit through the beam splitter 510 and then be converted into the first polarization state while passing through the first quarter wave plate 521a. The first noise light NL1 in the second polarization state may transmit through the polarizer 522 that transmits light of the first polarization.

The second noise light NL2 may be in the UP state, that is, light in which various polarization states are mixed. Of the second noise light NL2, only light in the first polarization state may transmit through the polarizer 522. The second noise light NL2 of the first polarization may pass through the first quarter wave plate 521a to be in the left handed circular polarization state and reach the concave mirror 200. Next, the second noise light NL2 in the left handed circular polarization state may be reflected by the beam splitter 510 to be in the right handed circular polarization state, and pass through the first quarter wave plate 521a again to be in the second polarization state. The polarizer 522 may transmit only light of the first polarization, the second noise light NL2 in the second polarization state may be blocked by the polarizer 522 and not reach the observer's field of view.

By arranging the second quarter wave plate 521c adjacent and parallel to the beam splitter 510, the image light LE may directly enter the observer's field of view without passing through the concave mirror 200, or the image forming unit 100 itself may block noise light entering the observer's field of view.

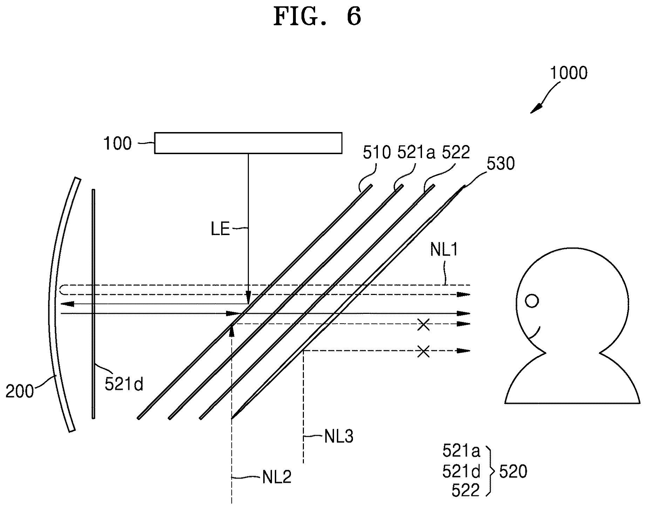

FIG. 6 is a schematic view of a structure of a display device according to another embodiment.

Referring to FIG. 6, the polarization control optical element 520 of the display device 1000 may further include a second quarter wave plate 521d as compared with FIG. 1. That is, the polarization control optical element 520 of the display device 1000 may include a plurality of quarter wave plates 521a and 521d. The first quarter wave plate 521a, which is one of the plurality of quarter wave plates 521a and 521d, may be provided between the beam splitter 510 and the polarizer 522, and the other second quarter wave plate 521d may be disposed closer to the concave mirror 200 between the concave mirror 200 and the beam splitter 510. For example, the second quarter wave plate 521d may be disposed in front of the concave mirror 200 such that an optical axis of the second quarter wave plate 521d and an optical axis of the concave mirror 200 are parallel to each other.

The image light LE may be provided by the image forming unit 100 in a first polarization state. The image light LE provided by the image forming unit 100 may be reflected by the beam splitter 510, and maintain the first polarization state, which is linear polarization. Next, the image light LE in the first polarization state may pass through the second quarter wave plate 521d to be in a left handed circular polarization state, and be reflected by the concave mirror 200 to be in a right handed circular polarization state. Next, the image light LE in the right handed circular polarization state may pass through the second quarter wave plate 521d again to be in the second polarization state, and transmit through the beam splitter 510 and be incident on the polarizer 522. The polarizer 522 transmits light of the second polarization, and thus the image light LE may be transmitted to an observer's field of view.

The first noise light NL1 may be in an UP state, that is, light in which various polarization states are mixed. Of the first noise light NL1, only light in the second polarization state may transmit through the polarizer 522. The first noise light NL1 in the second polarization state may transmit through the beam splitter 510 to be incident on the second quarter wave plate 521d, pass through the second quarter wave plate 521d to be converted into a right handed circular polarization state and reach the concave mirror 200. The first noise light NL1 in the right handed circular polarization state may be reflected by the concave mirror 200 to be converted into a right handed circular polarization state, pass through the second quarter wave plate 521d to be in the first polarization state and transmit through the beam splitter 510. The first noise light NL1 in the first polarization state may be blocked by the polarizer 522 that transmits only light of the second polarization and not be transmitted to an observer's field of view.

The second noise light NL2 may be in the UP state, that is, light in which various polarization states are mixed. Of the second noise light NL2, only light in the second polarization state may transmit through the polarizer 522. The second noise light NL2 in the second polarization state may be reflected by the beam splitter 510, and maintain the second polarization state which is a linear polarization state. Next, the second noise light NL2 in the second polarization state may transmit through the polarizer 522 and reach the observer's field of view.

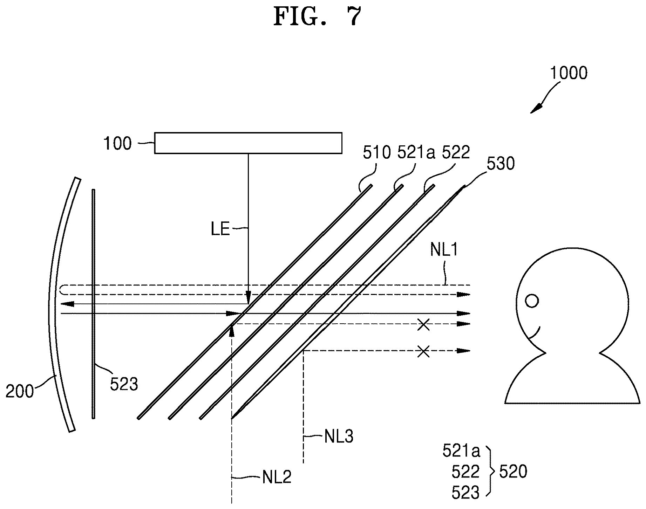

FIG. 7 is a schematic view of a structure of a display device according to another embodiment.

Referring to FIG. 7, the display device 1000 may further include a phase retarder 523. The phase retarder 523 may be provided between the concave mirror 200 and the beam splitter 510. The phase retarder 523 may be configured to compensate for a polarization error. The phase retarder 523 may delay the phase of incident light by a certain angle. A polarization error may occur due to a curved surface provided in the concave mirror 200 during a polarization conversion on an optical path on which the image light LE and the first noise light NL1 pass by the concave mirror 200. The phase retarder 523 delaying the phase of incident light is disposed to compensate for the polarization error, and thus, the image light LE may be transmitted to an observer's field of view, and the efficiency of blocking the first noise light NL1 and the second noise light NL2 from the observer's field of view may be increased.

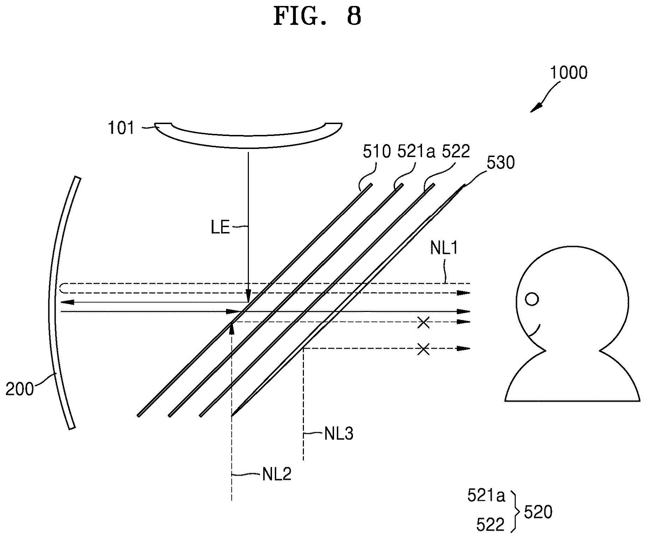

FIG. 8 is a schematic view of a structure of a display device according to another embodiment.

Referring to FIG. 8, an image forming unit 101 may be configured as a convex curved display.

A curved display is a display device in which the edge of a display panel is bent, and the display panel may include an OLED, an LCD, a field emission display device (FED), an electronic paper display device (ED), etc.

The convex curved display described above may effectively reduce distortion caused by a magnification optical system.

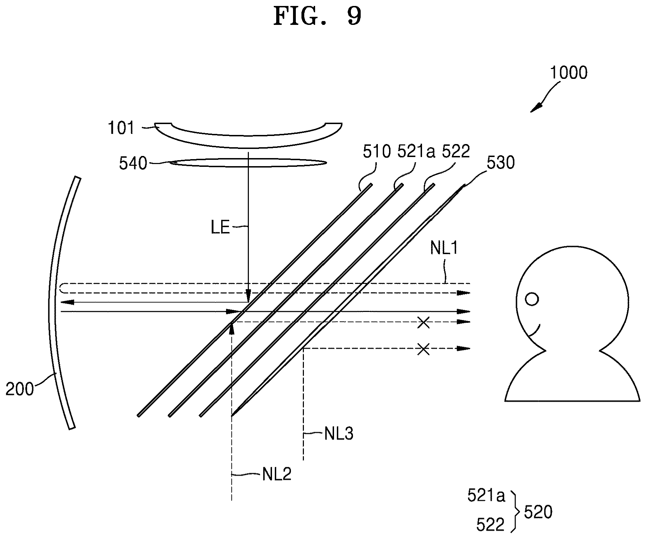

FIG. 9 is a schematic view of a structure of a display device according to another embodiment.

Referring to FIG. 9, the display device 1000 may further include a lens 540 as compared with FIG. 8. The lens 540 may be provided between the image forming unit 101 and the beam splitter 510. The lens 540 may adjust the curvature of an image caused by the image forming unit 101 configured as a curved display.

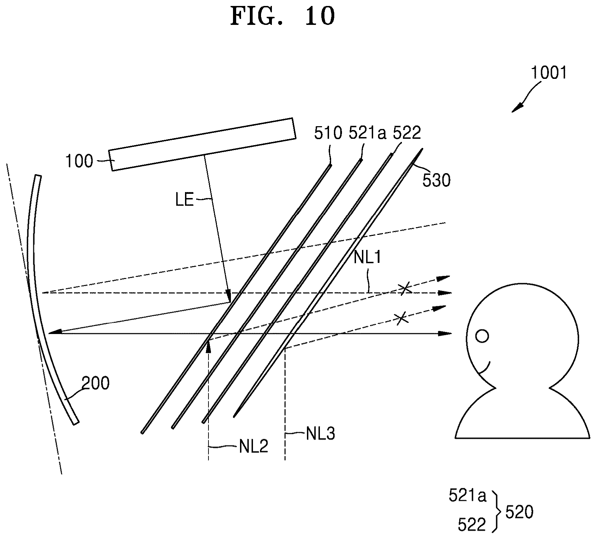

FIG. 10 is a schematic view of a structure of a display device according to another embodiment.

Referring to FIG. 10, a display device 1001 may be configured such that the image forming unit 100, the concave mirror 200, the beam splitter 510, the first quarter wave plate 521a, the polarizer 522, and the anti-reflection film 530 are inclined as compared with FIG. 1. The image forming unit 100 and the concave mirror 200 are configured to be inclined, and thus noise and image distortion may be minimized. In addition, the beam splitter 510, the first quarter wave plate 521a, the polarizer 522, and the anti-reflection film 530 are configured to be inclined, and thus a reflection reduction rate by the anti-reflection film 530 may be improved.

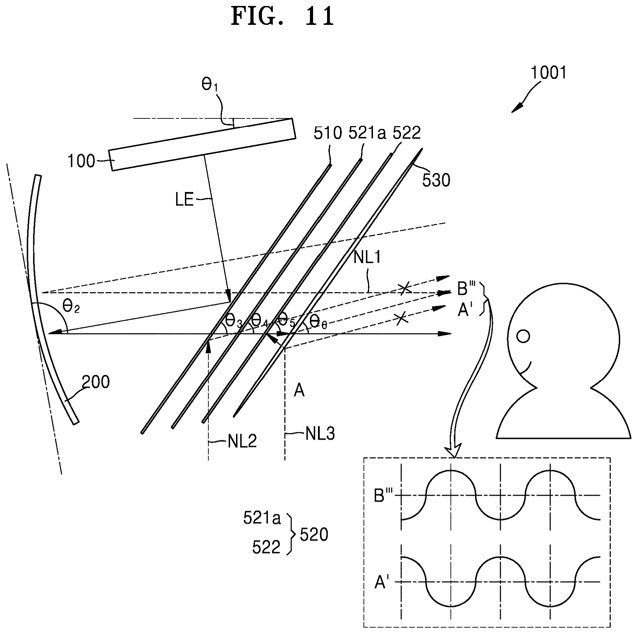

FIG. 11 is a schematic view of an angle formed by each component of the display device of FIG. 10 with an optical axis of image light reflected from a concave mirror.

Referring to FIG. 11, the image forming unit 100 may be configured to be inclined with respect to an optical axis of image light reflected from the concave mirror 200. An angle $\theta_1$ formed by the image forming unit 100 with the optical axis of the image light reflected from the concave mirror 200 may be 5 degrees or more and less than 45 degrees.

The concave mirror 200 may be configured to be inclined with respect to the optical axis of the image light reflected by the concave mirror 200. An angle ($\theta_2$) formed by the concave mirror 200 with the optical axis of the image light reflected from the concave mirror 200 may be 95 degrees or more and less than 135 degrees. Here, the angle ($\theta_2$) is an angle between a tangent plane at the center point of the concave mirror 200 and the optical axis of the image light.

Each of the beam splitter 510, the first quarter wave plate 521a, the polarizer 522, and the anti-reflection film 530 may be configured to be inclined with respect to the optical axis of the image light reflected by the concave mirror 200. Each of angles $\theta_3$, $\theta_4$, $\theta_5$, $\theta_6$ respectively formed by the beam splitter 510, the first quarter wave plate 521a, the polarizer 522, and the anti-reflection film 530 with the optical axis of the image light reflected by the concave mirror 200 may be 95 degrees or more and less than 135 degrees. The beam splitter 510, the first quarter wave plate 521a, the polarizer 522, and the anti-reflection film 530 may be disposed in parallel with each other. For example, the angles $\theta_3$, $\theta_4$, $\theta_5$, $\theta_6$ respectively formed by the beam splitter 510, the first quarter wave plate 521a, the polarizer 522, and the anti-reflection film 530 with the optical axis of the image light reflected by the concave mirror 200 may be the same.

The concave mirror 200 is configured to be inclined with respect to the optical axis of the image light reflected from the concave mirror 200, and thus the first noise light NL1 may be incident on the concave mirror 200 to be inclined with respect to the optical axis of the image light reflected from the concave mirror 200. The first noise light NL1 that is incident on the concave mirror 200 to be inclined with respect to the optical axis of the image light reflected from the concave mirror 200 may be reflected from the concave mirror 200 and not reach an observer's field of view. In addition, image distortion may be minimized by configuring the angles of the image forming unit 100 and the concave mirror 200 to be inclined.

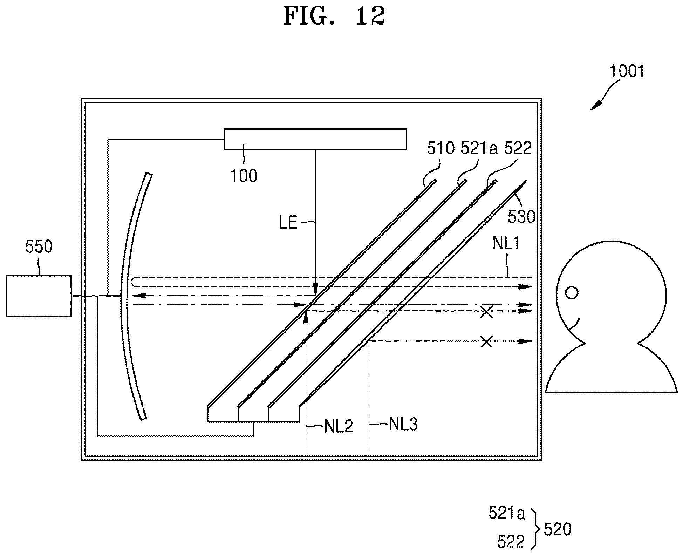

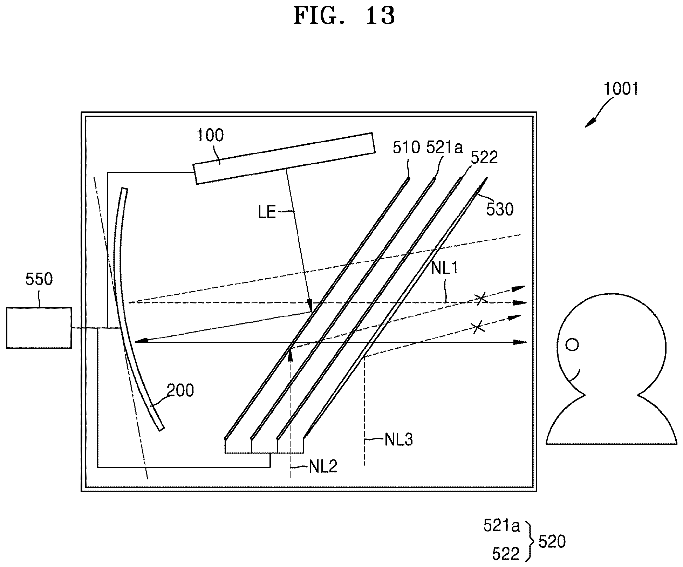

The beam splitter 510, the quarter wave plate 521a, the polarizer 522, and the anti-reflection film 530 are configured to be inclined with respect to the optical axis of the image light reflected from the concave mirror 200, and thus the third noise light NL3 may be incident and reflected to be inclined with respect to the optical axis of the image light reflected from the concave mirror 200 and not reach the observer's field of view The beam splitter 510, the first quarter wave plate 521a, the polarizer 522, and the anti-reflection film 530 are configured to be inclined, and thus the distance between the light A' reflected by the anti-reflection film 530 and the light B‴ reflected by the polarizer 522 and transmitted through the anti-reflection film 530 may be less in FIG. 11 than in FIG. 2. Therefore, the beam splitter 510, the first quarter wave plate 521a, the polarizer 522, and the anti-reflection film 530 are configured to be inclined, and thus offset between the light A' reflected by the anti-reflection film 530 and the light B‴ reflected by the polarizer 522 and transmitted through the anti-reflection film 530 may be more easily performed. Accordingly, a reflection reduction rate by the anti-reflection film 530 may be improved. FIGS. 12 and 13 are schematic views of a structure of an anti-reflection film according to another embodiment.

Referring to FIG. 12, the display device 1001 may further include an angle adjustment device 550. The angle adjustment device 550 may adjust angles of the image forming unit 100, the concave mirror 200, the beam splitter 510, the first quarter wave plate 521a, the polarizer 522, and the anti-reflection film 530. Referring to FIG. 13, the angle adjustment device 550 may adjust the angles of the image forming unit 100, the concave mirror 200, the beam splitter 510, the first quarter wave plate 521a, the polarizer 522, and the anti-reflection film 530 to be inclined with respect to an optical axis of image light reflected by the concave mirror 200.

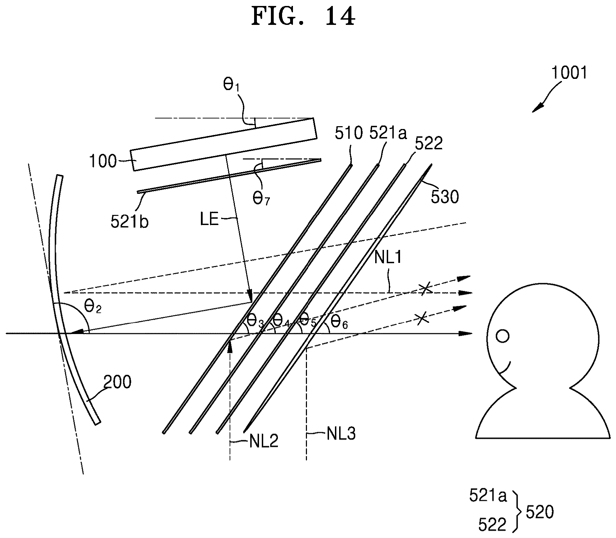

FIG. 14 is a schematic view of a structure of a display device according to another embodiment.

Referring to FIG. 14, the second quarter wave plate 521b provided between the image forming unit 100 and the beam splitter 510 may be inclined with respect to an optical axis of image light reflected by the concave mirror 200. An angle ($\theta_7$) formed by the second quarter wave plate 521b with the optical axis of the image light reflected from the concave mirror 200 may be 5 degrees or more and less than 45 degrees. The angle ($\theta_7$) formed by the second quarter wave plate 521b with the optical axis of the image light reflected from the concave mirror 200 may be the same as the angle $\theta_1$ formed by the image forming unit 100 with the optical axis of the image light reflected from the concave mirror 200.

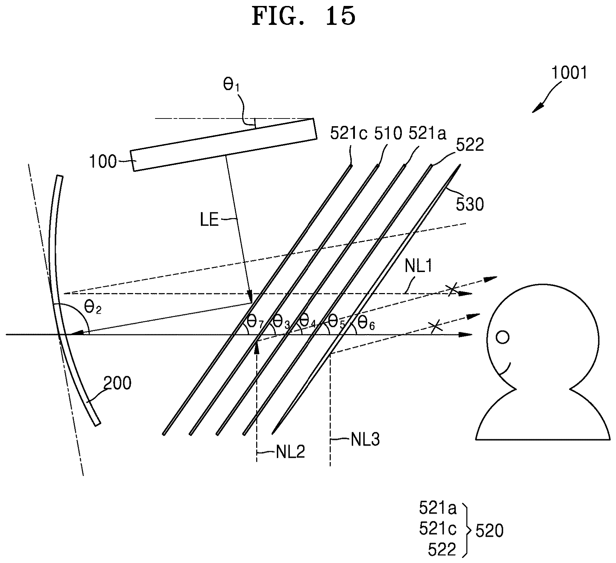

FIG. 15 is a schematic view of a structure of a display device according to another embodiment.

Referring to FIG. 15, the second quarter wave plate 521c provided closer to the beam splitter 510 between the concave mirror 200 and the beam splitter 510 may be configured to be inclined with respect to an optical axis of image light reflected by the concave mirror 200. The angle ($\theta_7$) formed by the second quarter wave plate 521c with the optical axis of the image light reflected from the concave mirror 200 may be 50 degrees or more and less than 90 degrees. The angle ($\theta_7$) formed by the second quarter wave plate 521c with the optical axis of the image light reflected from the concave mirror 200 may be the same as the angle $\theta_1$ formed by the beam splitter 510 with the optical axis of the image light reflected from the concave mirror 200.

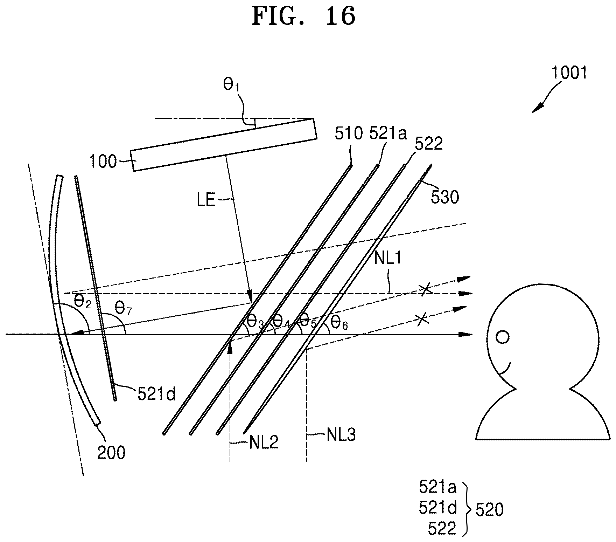

FIG. 16 is a schematic view of a structure of a display device according to another embodiment.

Referring to FIG. 16, the second quarter wave plate 521d provided closer to the concave mirror 200 between the concave mirror 200 and the beam splitter 510 may be configured to be inclined with respect to an optical axis of image light reflected by the concave mirror 200. The angle ($\theta_7$) formed by the second quarter wave plate 521d with the optical axis of the image light reflected from the concave mirror 200 may be 95 degrees or more and less than 135 degrees. The angle ($\theta_7$) formed by the second quarter wave plate 521d with the optical axis of the image light reflected from the concave mirror 200 may be the same as the angle ($\theta_2$) formed by the concave mirror 200 with the optical axis of the image light reflected from the concave mirror 200.

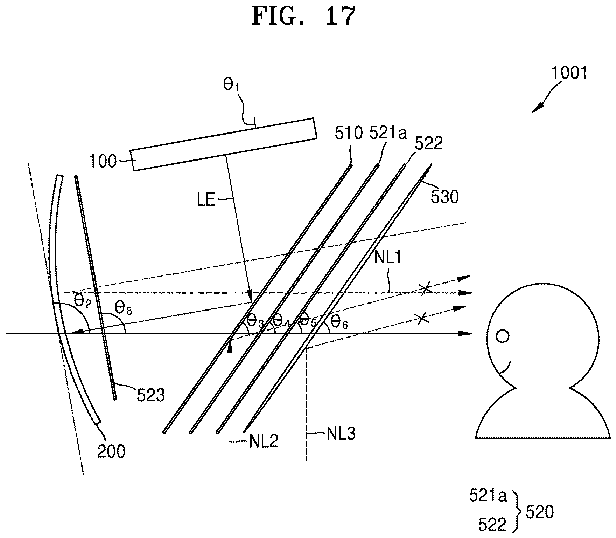

FIG. 17 is a schematic view of a structure of a display device according to another embodiment.

Referring to FIG. 17, the phase retarder 523 may be configured to be inclined with respect to an optical axis of image light reflected by the concave mirror 200. The angle ($\theta_8$) formed by the phase retarder 523 with the optical axis of the image light reflected from the concave mirror 200 may be 95 degrees or more and less than 135 degrees. The angle ($\theta_8$) formed by the phase retarder 523 with the optical axis of the image light reflected from the concave mirror 200 may be the same as the angle ($\theta_2$) formed by the concave mirror 200 with the optical axis of the image light reflected from the concave mirror 200.

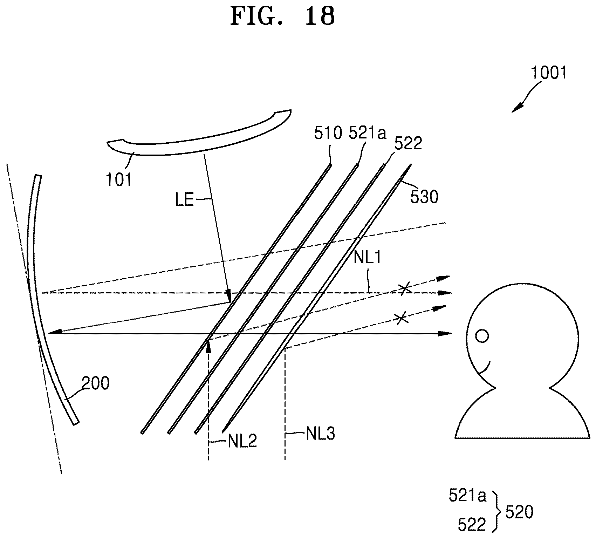

FIG. 18 is a schematic view of a structure of a display device according to another embodiment.

Referring to FIG. 18, the image forming unit 101 of the display device 101 may be configured as a convex curved display.

The convex curved display described above may effectively reduce distortion caused by a magnification optical system.

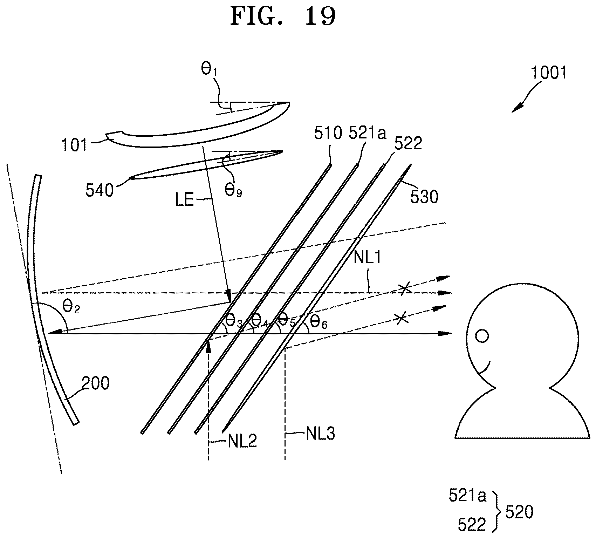

FIG. 19 is a schematic view of a structure of a display device according to another embodiment.

Referring to FIG. 19, the display device 1001 may further include the lens 540 as compared with FIG. 18. The lens 540 may be provided between the image forming unit 101 and the beam splitter 510. The lens 540 may adjust the curvature of an image caused by the image forming unit 101 configured as a curved display.

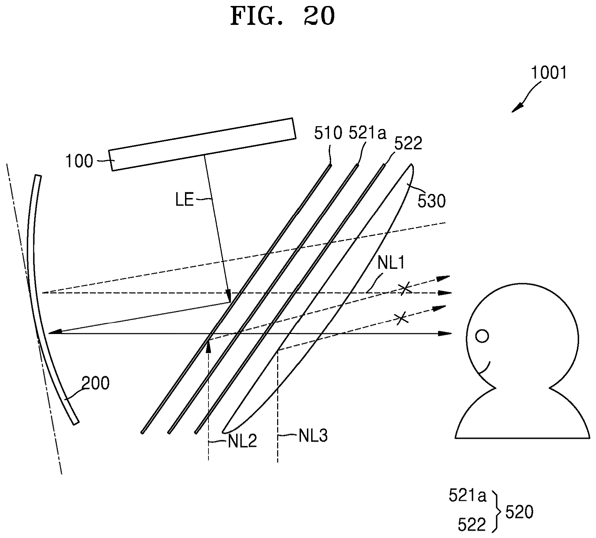

FIG. 20 is a schematic view of a structure of a display device according to another embodiment.

Referring to FIG. 20, the thickness of the anti-reflection film 530 may vary according to positions. For example, the thickness of the anti-reflection film 530 may be the largest in a central portion, and decreases away from the central portion.

The display devices 1000 and 1001 described above may be implemented as a wearable type or a non-wearable type, and may be applied to various fields. For example, the display devices 1000 and 1001 described above may be used in combination with general display devices, televisions, monitors, etc., and may be applied to various products such as mobile devices, automobiles, heads-up displays, augmented/virtual reality devices, large signage, wearable displays, rollable TVs, and stretchable displays.

While the disclosure has been particularly shown and described with reference to embodiments thereof, it will be understood by those of ordinary skill in the art that various changes in form and details may be made therein without departing from the spirit and scope of the disclosure as defined by the appended claims. The embodiments should be considered in a descriptive sense only and not for purposes of limitation. For example, each element described as a single type may be distributed, and similarly, elements described to be distributed may be combined.

The display device and method described above have been described with reference to the embodiments shown in the drawings to help understanding, but this is only exemplary, and it will be understood by those of skilled in the art that various modifications and other equivalent embodiments may be made therefrom. The disclosed embodiments should be considered in descriptive sense only and not for purposes of limitation. The scope of the specification is defined not by the detailed description of the disclosure but by the appended claims, and all differences within the scope will be construed as being included in the disclosure.

## Claims

1. A display device comprising:

   an image forming unit configured to provide image light;
   a concave mirror configured to focus the image light provided by the image forming unit;
   a beam splitter disposed obliquely with respect to a traveling path of the image light emitted from the image forming unit;
   a polarization control optical element comprising at least one quarter wave plate and a polarizer configured to transmit the image light provided by the image forming unit to an observer's field of view through the concave mirror and the beam splitter; and
   an anti-reflection film disposed between the polarizer and an observer and
   configured to block noise light reflected from the polarizer from the observer's field of view on the opposite side of the image forming unit,
   wherein a thickness of the anti-reflection film decreases away from a
   central portion of the anti-reflection film.

2. The display device of claim 1, wherein the anti-reflection film is configured to refract the noise light reflected by the polarizer, such that the noise light reflected by the polarizer and noise light reflected from a surface of the anti-reflection film are offset from each other.

3. The display device of claim 1, wherein

   the beam splitter is configured to reflect light of a first polarization, which is linear polarization in a first direction, and transmit light of a second polarization perpendicular to the first polarization, and
   the polarizer is configured to transmit the light of the second polarization and block the light of the first polarization.

4. The display device of claim 1, wherein

the image light provided by the image forming unit is in a unpolarization state, and
the polarizer is disposed between the beam splitter and the observer, and the quarter wave plate is disposed between the beam splitter and the polarizer.

5. The display device of claim 1, wherein

   the image light provided by the image forming unit has a first polarization state that is linear polarization in a first direction, and
   the polarization control optical element includes a plurality of quarter wave plates, one of the plurality of quarter wave plates being disposed between the beam splitter and the polarizer, the other one of the plurality of quarter wave plates being disposed between the image forming unit and the beam splitter or between the beam splitter and the concave mirror, and the polarizer is disposed between the beam splitter and the observer.

6. The display device of claim 1, wherein the polarization control optical element includes a phase retarder disposed between the concave mirror and the beam splitter.

7. The display device of claim 1, wherein the image forming unit is a curved display having a convex shape.

8. The display device of claim 7, further comprising: a lens disposed in parallel with the image forming unit between the image forming unit and the concave mirror.

9. A display device comprising:

   an image forming unit configured to provide image light;
   a concave mirror configured to focus the image light provided by the image forming unit;
   a beam splitter disposed obliquely with respect to a traveling path of the image light emitted from the image forming unit; and
   a polarization control optical element comprising at least one quarter wave plate and a polarizer configured to transmit the image light provided by the image forming unit to an observer's field of view through the concave mirror and the beam splitter,
   wherein an angle formed by the image forming unit with an optical axis of image light reflected from the concave mirror is 5 degrees or more and
   less than 45 degrees, an angle formed by the concave mirror with the optical axis is 95 degrees or more and less than 135 degrees, and an angle formed by each of the at least one quarter wave plate and the polarizer with the optical axis is 50 degrees or more and less than 90 degrees.

10. The display device of claim 9, wherein

the beam splitter is configured to reflect light of a first polarization, which is linear polarization in a first direction, and transmit light of a second polarization perpendicular to the first polarization, and
the polarizer is configured to transmit the light of the second polarization and block the light of the first polarization.

11. The display device of claim 9, wherein

the image light provided by the image forming unit is in a unpolarization state, and
the polarizer is disposed between the beam splitter and the observer, and the quarter wave plate is disposed between the beam splitter and the polarizer.

12. The display device of claim 9, wherein

the image light provided by the image forming unit has a first polarization state that is linear polarization in a first direction, and
the polarization control optical element includes a plurality of quarter wave plates, one of the plurality of quarter wave plates being disposed between the beam splitter and the polarizer, the other one of the plurality of quarter wave plates being disposed between the image forming unit and the beam splitter or between the beam splitter and the concave mirror, and the polarizer is disposed between the beam splitter and the observer.

13. The display device of claim 9, wherein
the polarization control optical element includes a phase retarder disposed between the concave mirror and the beam splitter.

14. The display device of claim 9, wherein
the image forming unit is a curved display having a convex shape.

15. The display device of claim 9, further comprising:
a lens disposed in parallel with the image forming unit between the image forming unit and the concave mirror.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

FIG. 13

# FIG. 14

# FIG. 15

# FIG. 16

# FIG. 17

## FIG. 18

# FIG. 19

# FIG. 20

# EP 4 675 338 A1

## INTERNATIONAL SEARCH REPORT

| International application No. |
|---|
| **PCT/KR2024/003514** |

### A. CLASSIFICATION OF SUBJECT MATTER

**G02B 30/56**(2020.01)i; **G02B 27/14**(2006.01)i; **G02B 1/11**(2006.01)i; **G02B 5/10**(2006.01)i

According to International Patent Classification (IPC) or to both national classification and IPC

### B. FIELDS SEARCHED

Minimum documentation searched (classification system followed by classification symbols)

G02B 30/56(2020.01); G02B 27/01(2006.01); G02B 3/00(2006.01); G02B 30/00(2020.01); G02B 5/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(video), 오목 미러(concave mirror), 빔 스플리터(beam splitter), 1/4 파장판 (quarter wave plate), 편광자(polarizer), 반사 방지 필름(Anti-reflection film)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0031850 A (SAMSUNG DISPLAY CO., LTD.) 14 March 2022 (2022-03-14)<br>　　　See paragraphs [0109]-[0113] and figure 10. | 1-15 |
| A | KR 10-2020-0118492 A (MATRIXED REALITY TECHNOLOGY CO., LTD.) 15 October 2020 (2020-10-15)<br>　　　See paragraphs [0031]-[0104] and figures 1-13. | 1-15 |
| A | EP 4160296 A1 (JORJIN TECHNOLOGIES INC.) 05 April 2023 (2023-04-05)<br>　　　See paragraphs [0008]-[0035] and figures 1-4. | 1-15 |
| A | CN 210488131 U (ZHEJIANG CRYSTAL OPTOELECTRONIC TECHNOLOGY CO., LTD.) 08 May 2020 (2020-05-08)<br>　　　See paragraphs [0045]-[0102] and figures 1-21. | 1-15 |
| A | KR 10-2021-0090508 A (SK TELECOM CO., LTD.) 20 July 2021 (2021-07-20)<br>　　　See claims 1-2 and figures 1-4. | 1-15 |

☐ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 June 2024** | **28 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 675 338 A1

**INTERNATIONAL SEARCH REPORT**
Information on patent family members

International application No.

**PCT/KR2024/003514**

| Patent document cited in search report | | | Publication date (day/month/year) | Patent family member(s) | | | Publication date (day/month/year) |
|---|---|---|---|---|---|---|---|
| KR | 10-2022-0031850 | A | 14 March 2022 | CN | 114137737 | A | 04 March 2022 |
| | | | | US | 11553171 | B2 | 10 January 2023 |
| | | | | US | 2022-0078398 | A1 | 10 March 2022 |
| KR | 10-2020-0118492 | A | 15 October 2020 | CN | 108181709 | A | 19 June 2018 |
| | | | | CN | 108319018 | A | 24 July 2018 |
| | | | | CN | 108319019 | A | 24 July 2018 |
| | | | | CN | 110146978 | A | 20 August 2019 |
| | | | | CN | 110161683 | A | 23 August 2019 |
| | | | | CN | 110161684 | A | 23 August 2019 |
| | | | | CN | 110161685 | A | 23 August 2019 |
| | | | | CN | 110161686 | A | 23 August 2019 |
| | | | | CN | 110161687 | A | 23 August 2019 |
| | | | | CN | 110161688 | A | 23 August 2019 |
| | | | | CN | 110161689 | A | 23 August 2019 |
| | | | | CN | 110537133 | A | 03 December 2019 |
| | | | | CN | 110537134 | A | 03 December 2019 |
| | | | | CN | 110537135 | A | 03 December 2019 |
| | | | | CN | 110546550 | A | 06 December 2019 |
| | | | | CN | 110573933 | A | 13 December 2019 |
| | | | | CN | 115657305 | A | 31 January 2023 |
| | | | | CN | 115755404 | A | 07 March 2023 |
| | | | | EP | 3754407 | A1 | 23 December 2020 |
| | | | | EP | 3754407 | B1 | 03 April 2024 |
| | | | | EP | 3754408 | A1 | 23 December 2020 |
| | | | | EP | 3754409 | A1 | 23 December 2020 |
| | | | | EP | 3754410 | A1 | 23 December 2020 |
| | | | | EP | 3754411 | A1 | 23 December 2020 |
| | | | | JP | 2021-513685 | A | 27 May 2021 |
| | | | | JP | 2021-513686 | A | 27 May 2021 |
| | | | | JP | 2021-513687 | A | 27 May 2021 |
| | | | | JP | 7285579 | B2 | 02 June 2023 |
| | | | | JP | 7329207 | B2 | 18 August 2023 |
| | | | | JP | 7418706 | B2 | 22 January 2024 |
| | | | | KR | 10-2020-0118197 | A | 14 October 2020 |
| | | | | KR | 10-2020-0118203 | A | 14 October 2020 |
| | | | | KR | 10-2455328 | B1 | 14 October 2022 |
| | | | | KR | 10-2628264 | B1 | 23 January 2024 |
| | | | | US | 11042040 | B2 | 22 June 2021 |
| | | | | US | 11460704 | B2 | 04 October 2022 |
| | | | | US | 11500205 | B2 | 15 November 2022 |
| | | | | US | 11693244 | B2 | 04 July 2023 |
| | | | | US | 11693245 | B2 | 04 July 2023 |
| | | | | US | 11874466 | B2 | 16 January 2024 |
| | | | | US | 2020-0348521 | A1 | 05 November 2020 |
| | | | | US | 2020-0348522 | A1 | 05 November 2020 |
| | | | | US | 2020-0348530 | A1 | 05 November 2020 |
| | | | | US | 2020-0371368 | A1 | 26 November 2020 |
| | | | | US | 2020-0371371 | A1 | 26 November 2020 |
| | | | | US | 2021-0271100 | A1 | 02 September 2021 |
| | | | | US | 2023-0296905 | A1 | 21 September 2023 |

Form PCT/ISA/210 (patent family annex) (July 2022)

33

INTERNATIONAL SEARCH REPORT
Information on patent family members

International application No.

**PCT/KR2024/003514**

| Patent document cited in search report | | | | Publication date (day/month/year) | Patent family member(s) | | | Publication date (day/month/year) |
|---|---|---|---|---|---|---|---|---|
| | | | | | WO | 2019-154426 | A1 | 15 August 2019 |
| | | | | | WO | 2019-154428 | A1 | 15 August 2019 |
| | | | | | WO | 2019-154429 | A1 | 15 August 2019 |
| | | | | | WO | 2019-154430 | A1 | 15 August 2019 |
| | | | | | WO | 2019-154432 | A1 | 15 August 2019 |
| EP | 4160296 | A1 | | 05 April 2023 | TW | 202316171 | A | 16 April 2023 |
| | | | | | TW | I798853 | B | 11 April 2023 |
| | | | | | US | 2023-0108544 | A1 | 06 April 2023 |
| CN | 210488131 | U | | 08 May 2020 | None | | | |
| KR | 10-2021-0090508 | A | | 20 July 2021 | None | | | |

Form PCT/ISA/210 (patent family annex) (July 2022)